# DEMANDE DE BREVET EUROPEEN

(11) **EP 4 411 663 A1**
(43) Date de publication de la demande: **07.08.2024**
(21) Numéro de dépôt: 24155150.6
(22) Date de dépôt: 31.01.2024
(51) Int. Cl.: G06T 19/20

(54) **PROCÉDÉ DE GÉNÉRATION D'UNE IMAGE 3D COMPORTANT AU MOINS UN ÉLÉMENT GRAPHIQUE 3D FUSIONNÉ CORRESPONDANT À UN OBJET À DÉTECTER**

(30) Priorité: 02.02.2023 FR 2300972
(71) Demandeur: Logyx, 31170 Tournefeuille (FR)
(72) Inventeur: ARASSE, Christophe, 31170 TOURNEFEUILLE (FR); YRIARTE, Sébastien, 31170 TOURNEFEUILLE (FR)
(74) Mandataire: Argyma

(57) **Abrégé**

L'invention concerne un procédé de génération d'une image 3D comportant au moins un élément graphique 3D fusionné correspondant à au moins un objet à détecter par un agent de sûreté ou par un algorithme de détection utilisant l'intelligence artificielle, comprenant notamment les étapes d'intégration (E4) d'au moins un élément graphique 3D préparé dans une image 3D générée afin que ledit au moins un élément graphique 3D apparaisse dans le contenant sur l'image 3D, de traitement (E5) de l'image 3D comportant l'au moins un élément graphique 3D intégré pour transformer le maillage de points de l'au moins un élément graphique 3D en voxels dans l'image 3D, et de post-traitement (E6) de l'image 3D traitée pour ajouter aux voxels des effets artificiels liés au matériau de l'au moins un élément graphique 3D afin de fusionner ledit au moins un élément graphique 3D dans l'image 3D.

## Description

### [Domaine technique]

La présente invention se rapporte au domaine de la sûreté et concerne plus particulièrement un dispositif pouvant être utilisé à des fins de formation, de maintien en compétence et de certification des personnels de sûreté, notamment aéroportuaire, ou d'entraînement d'une intelligence artificielle intégrée dans un équipement d'imagerie radioscopique.

### [Etat de la technique antérieure]

Dans le monde aéroportuaire, il est connu d'utiliser des équipements de sûreté comportant des convoyeurs couplés à un équipement d'imagerie radioscopique permettant de visualiser sur des images en deux dimensions le contenu des bagages des passagers. Ce type de système de sûreté est également utilisé dans d'autres lieux tels que, par exemple, les infrastructures sensibles ou destinées à accueillir du public comme les gares, les prisons, les stades, les salles de spectacles ou les monuments historiques.

Afin de former, de maintenir en compétence et de tester les agents de sûreté qui contrôlent les images, il est connu d'insérer des objets à détecter, par exemple des armes ou tout autre objet interdit, dans les éléments passant dans l'équipement d'imagerie radioscopique. Cette méthode est fastidieuse et chronophage car il faut insérer les objets dans les éléments à contrôler (bagages, vêtements, ...), former ou tester les agents, puis récupérer les objets.

Une autre solution connue consiste à modifier les images générées par l'équipement d'imagerie radioscopique avant qu'elles soient visualisées par l'agent de sûreté. Cette modification consiste à scanner les objets à détecter au préalable puis à superposer les images des objets scannés sur les images 2D des éléments à contrôler passant dans l'équipement d'imagerie radioscopique. Cette méthode peut également s'avérer fastidieuse et chronophage. En outre, la crédibilité des objets intégrés dans les images 2D peut s'avérer douteuse, ce qui permet aux agents de les détecter facilement et présente un inconvénient en termes de formation.

Afin notamment d'entrainer les algorithmes de détection intégrés aux équipements d'imagerie radioscopique ou vérifier le bon fonctionnement et le maintien de la performance de ces équipements, il est également connu d'utiliser ces deux solutions.

La récente arrivée d'équipements d'imagerie radioscopique permettant de visualiser le contenu des bagages en 3D, permettant une meilleure visualisation du bagage et des objets qu'il contient, mais aussi le développement grandissant de l'intelligence artificielle dans le domaine de la sûreté, font naître un besoin relatif à la formation, au maintien en compétence, à la certification et aux tests des personnels de sûreté avec cette nouvelle technologie, mais fait naître également un besoin relatif à l'entrainement, connu sous le nom de « Machine Learning », des intelligences artificielles intégrées dans les équipements d'imagerie radioscopique.

Pour répondre à ces besoins, une première approche consiste à insérer des objets interdits dans les valises et sacs à contrôler afin qu'ils apparaissent dans les images 3D. Toutefois, comme pour la méthode 2D, ce procédé peut s'avérer fastidieux et chronophage.

Une deuxième solution consiste à transformer les images 3D en images 2D, à insérer les objets à détecter en 2D par superposition dans les images 2D avant visualisation par l'agent, comme précédemment. Là encore, ce procédé peut s'avérer fastidieux et chronophage.

Il s'avérerait donc avantageux de proposer une solution simple, fiable et efficace permettant de remédier au moins en partie à ces inconvénients.

### [Exposé de l'invention]

Le but de l'invention est de fournir une solution simple, fiable, efficace et rapide pour former, maintenir en compétence, certifier et tester des agents de sûreté.

A cette fin, l'invention a tout d'abord pour but un procédé de génération d'une image 3D comportant au moins un élément graphique 3D fusionné correspondant à au moins un objet à détecter par un agent de sûreté ou par un algorithme de détection utilisant l'intelligence artificielle, ledit procédé comprenant les étapes de :
- préparation d'au moins un élément graphique 3D à détecter, ledit au moins un élément graphique 3D étant caractérisé par un maillage de points et au moins un matériau,
- génération d'une image 3D en voxels représentant au moins un contenant à contrôler par l'agent de sûreté ou par l'algorithme de détection utilisant l'intelligence artificielle,
- intégration de l'au moins un élément graphique 3D préparé dans l'image 3D générée afin que ledit au moins un élément graphique 3D apparaisse dans le contenant sur l'image 3D,
- traitement de l'image 3D comportant l'au moins un élément graphique 3D intégré pour transformer le maillage de points de l'au moins un élément graphique 3D en voxels dans l'image 3D,
- post-traitement de l'image 3D traitée pour ajouter aux voxels des effets artificiels liés au matériau de l'au moins un élément graphique 3D afin de fusionner ledit au moins un élément graphique 3D dans l'image 3D.

Par les termes « voxel », il est entendu un volume de pixels en trois dimensions.

Par les termes « maillage de points », il est entendu une représentation vectorielle en mailles de points.

Le contenant à contrôler peut par exemple être une valise, un sac, un colis, etc.

Le procédé selon l'invention permet d'intégrer un ou plusieurs objets 3D dans une image 3D en réalisant une impression virtuelle. Notamment, la transformation du maillage en voxels de chaque élément graphique 3D intégré dans l'image 3D permet de définir les contours et l'intérieur du ou desdits élément graphique 3D. L'intégration d'objet 3D virtuels dans une image 3D permet en outre d'éviter la manipulation d'objets dangereux ou de matières dangereuses, augmentant ainsi la sécurité au travail. L'intégration d'objet 3D virtuels dans une image 3D permet également d'intégrer des objets, par exemple à partir de leur spécification technique, non-encore à disposition ou dont l'accès est difficile ou impossible en raison des législations en vigueur. L'utilisation d'un maillage 3D permet d'utiliser de nombreuses variantes d'un objet (taille, matériaux, ...), de l'accessoiriser (par exemple pistolet vide, chargé, avec viseur, ...) et surtout de le modifier a posteriori via un éditeur 3D, par exemple pour le faire évoluer sans disposer d'un scanner, ce qui n'est pas le cas avec une acquisition (scan 3D) de l'objet physique. Un autre avantage de l'utilisation de menaces synthétiques 3D maillées réside dans le fait que le processus de fusion s'appuie sur des données vectorielles et le rend donc mathématiquement adaptable, contrairement à une acquisition physique. En exploitant des données vectorielles, le système peut fusionner une bibliothèque de menaces à n'importe quelle résolution de voxels. L'invention permet ainsi une compatibilité le avec des machines futures exploitant des résolutions plus importantes car il peut fusionner des menaces à une échelle submillimétrique. L'intégration d'objet 3D virtuels dans une image 3D permet aussi d'éviter l'utilisation d'objets polluants. Enfin, le procédé selon l'invention peut être mis en oeuvre parallèlement avec plusieurs machines, par exemple via un réseau de communication, ce qui s'avère plus simple et implique moins de maintenance et de coûts qu'avec une pluralité d'équipements d'imagerie radioscopique 3D réels utilisés en parallèle. En outre, le procédé selon l'invention permet de simuler plusieurs machines différentes en parallèle.

Avantageusement, le traitement de l'image 3D comportant l'au moins un élément graphique 3D intégré comprend un balayage numérique 3D des éléments de l'image 3D.

De préférence, le balayage comprend l'envoi d'une pluralité de rayons numériques sur les éléments de l'image 3D afin de définir pour chacun leur contour et leur position. Un tel balayage peut par exemple être réalisé par des algorithmes de traçage de rayons (« ray tracing » en langue anglaise) ou bien de marche de rayons (« ray marching » en langue anglaise). Un tel balayage, similairement à une technique d'impression 3D, permet de réaliser notamment les traces d'épaisseur des éléments apparaissant sur l'image 3D.

Dans un mode de réalisation, la génération de l'image 3D est réalisée à partir d'au moins un contenant réel, par exemple via un équipement d'imagerie radioscopique 3D réel.

Dans un autre mode de réalisation, la génération de l'image 3D est réalisée de manière virtuelle, par exemple à partir d'un générateur d'images 3D qui va générer une image 3D représentant l'au moins un contenant, éventuellement comportant des objets.

Dans un mode de réalisation, la préparation comprend la génération d'au moins un nouvel élément graphique 3D.

Dans un autre mode de réalisation, la préparation comprend la récupération d'au moins un élément graphique 3D existant, par exemple dans une base de données.

Avantageusement, la préparation comprend une étape d'identification et d'affectation d'un matériau à chaque partie de chaque élément graphique 3D.

Avantageusement encore, la préparation comprend une étape d'affectation d'une densité au matériau de l'au moins un élément graphique 3D, ladite densité permettant de déterminer la nature de la matière présente dans un voxel lors du traitement de l'image 3D.

Avantageusement encore, le post-traitement de l'image 3D comprend la création d'un volume de matière brute (i.e. dépourvue d'effets artificiels), la création d'un volume d'effets artificiels métalliques, la création d'un volume d'effet Compton et la fusion de ces trois volumes.

Selon un aspect de l'invention, le procédé comprend une étape d'association de métadonnées de l'au moins un élément graphique 3D à une zone de l'image 3D comprenant au moins en partie l'au moins un élément graphique 3D.

Selon un aspect de l'invention, le procédé comprend une étape de sélection, par l'agent de sûreté ou par l'algorithme de détection utilisant l'intelligence artificielle, d'une zone de l'image 3D post-traitée.

Selon un aspect de l'invention, le procédé comprend une étape de détection de l'au moins un élément graphique 3D lorsque la zone de l'image 3D post-traitée sélectionnée correspond à la zone associée aux métadonnées.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté ci-avant.

L'invention concerne également un module de génération d'une image 3D comportant au moins un élément graphique 3D correspondant à un objet à détecter par un agent de sûreté ou par un algorithme de détection utilisant l'intelligence artificielle, ledit module étant configuré pour :
- préparer au moins un élément graphique 3D à détecter, ledit au moins un élément graphique 3D étant caractérisé par un maillage de points et au moins un matériau,
- générer une image 3D en voxels représentant au moins un contenant à contrôler par l'agent de sûreté ou par l'algorithme de détection utilisant l'intelligence artificielle,
- intégrer au moins un élément graphique 3D préparé dans l'image 3D générée afin que ledit au moins un élément graphique 3D apparaisse dans le contenant dans l'image 3D,
- traiter l'image 3D comportant l'au moins un élément graphique 3D intégré pour transformer le maillage de points de l'au moins un élément graphique 3D en voxels dans l'image 3D,
- post-traiter l'image 3D traitée pour ajouter des effets liés au matériau afin de finaliser sa fusion dans l'image 3D.

De préférence, le module de génération est configuré pour, lors du traitement de l'image 3D comportant l'au moins un élément graphique 3D intégré, réaliser un balayage numérique des éléments de l'image 3D.

De préférence, le module de génération est configuré pour, lors d'un balayage, envoyer une pluralité de rayons numériques sur les éléments de l'image 3D afin de définir pour chacun leur contour et leur position, par exemple par « ray tracing » ou « ray marching ».

Avantageusement, le module de génération est configuré pour, lors de la préparation, identifier et affecter un matériau à chaque partie de chaque élément graphique 3D.

Avantageusement, le module de génération est configuré pour, lors de la préparation, affecter une densité au matériau de l'au moins un objet 3D, ladite densité permettant de déterminer la nature de la matière présente dans un voxel lors du traitement de l'image 3D.

Dans une forme de réalisation, le module de génération est configuré pour générer au moins une image 3D à partir d'au moins un contenant réel, par exemple via un équipement d'imagerie radioscopique 3D réel.

En variante ou en complément, le module de génération est configuré pour générer au moins une image 3D de manière virtuelle, par exemple à partir d'un générateur d'images 3D.

De manière avantageuse, le module de génération est configuré pour associer des métadonnées de l'au moins un élément graphique 3D à une zone de l'image 3D comprenant au moins en partie l'au moins un élément graphique 3D.

Avantageusement encore, le module de génération est configuré pour détecter l'au moins un élément graphique 3D lorsque la zone de l'image 3D post-traitée sélectionnée correspond à la zone associée aux métadonnées.

Dans une forme de réalisation, le module de génération est configuré pour, lors de la préparation de l'au moins un objet 3D, générer au moins un nouvel objet 3D.

En variante ou en complément, le module de génération est configuré pour, lors de la préparation de l'au moins un objet 3D, récupérer au moins un objet 3D existant.

De préférence, le module de génération est configuré pour, lors du post-traitement de l'image 3D, créer un volume de matière brute, créer un volume d'effets artificiels métalliques, créer un volume d'effets Compton et fusionner ces trois volumes.

L'invention concerne également un équipement informatique comprenant un module de génération tel que présenté ci-avant.

L'équipement informatique peut être un équipement d'utilisateur tel que, par exemple, un ordinateur, une tablette, un smartphone, un équipement de réalité virtuelle et/ou augmentée, etc.

L'équipement informatique peut être serveur.

Dans une forme de réalisation, l'équipement informatique est configuré pour permettre la sélection, par l'agent de sûreté ou par l'algorithme de détection utilisant l'intelligence artificielle, d'une zone de l'image 3D post-traitée.

L'invention concerne également un système comprenant un équipement informatique de type serveur tel que présenté ci-avant et au moins un équipement d'utilisateur configuré pour afficher une image 3D post-traitée reçue du serveur et pour permettre la sélection ou le pointage par un utilisateur dudit équipement d'utilisateur d'une zone de l'image 3D post-traitée.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La figure 1 illustre schématiquement une forme de réalisation de l'équipement informatique selon l'invention.
[Fig 2] La figure 2 illustre schématiquement une forme de réalisation du système selon l'invention.

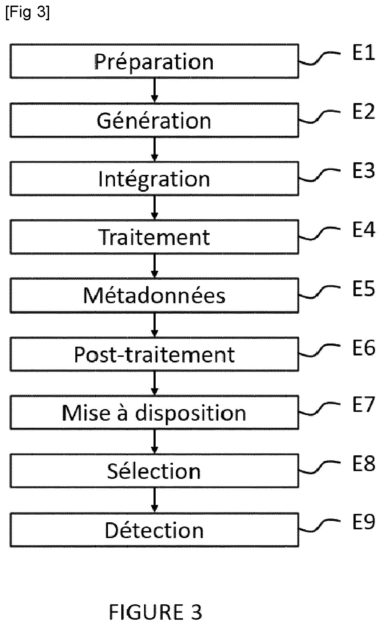

[Fig 3] La figure 3 illustre schématiquement un mode de réalisation du procédé selon l'invention.

### [Description des modes de réalisation]

L'équipement informatique selon l'invention peut être mis en oeuvre de manière autonome ou bien dans un système de communication afin de permettre à un agent de sûreté ou à un algorithme de détection utilisant l'intelligence artificielle de détecter des objets interdits dans des images 3D.

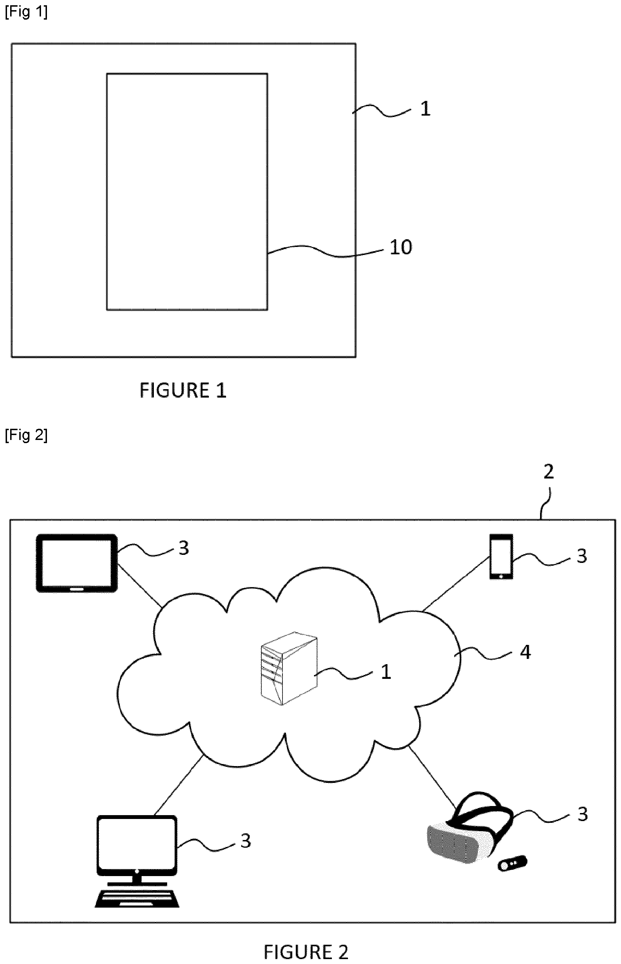

La figure 1 illustre une forme de réalisation d'un équipement informatique 1 selon l'invention. L'équipement informatique 1 peut fonctionner de manière autonome en étant par exemple de type ordinateur, tablette ou smartphone ou tout autre équipement adapté ou bien en étant intégré dans un système plus large de type réseau de communication.

La figure 2 illustre une forme de réalisation d'un système de communication 2 selon l'invention. Le système 2 comprend un équipement informatique 1 de type serveur et des équipements d'utilisateur 3 de type ordinateur, tablette, smartphone ou équipement de réalité virtuelle et/ou augmentée, connectés audit équipement informatique 1 via un réseau de communication 4.

### Equipement informatique 1

En référence à la figure 1, l'équipement informatique 1 comprend un module de génération 10 selon l'invention. Dans le cas d'un équipement informatique 1 de type ordinateur, l'équipement informatique 1 comprend un écran, un clavier et une souris pour permettre à l'agent de sûreté d'interagir avec l'image 3D apparaissant sur ledit écran, notamment en pointant un objet suspect dans ladite image 3D. Dans le cas d'un équipement informatique 1 de type smartphone ou tablette, l'équipement informatique 1 comprend un écran tactile permettant la saisie, le pointage et la sélection pour permettre à l'agent de sûreté d'interagir avec l'image 3D apparaissant sur ledit écran tactile, notamment pour tenter de détecter un objet suspect dans ladite image 3D. Dans le cas d'un équipement informatique 1 de type équipement de réalité virtuelle ou réalité augmentée, l'équipement informatique 1 comprend avantageusement un système de suivi des mains, un système de suivi des yeux, de capteurs d'impulsion neuronales ou d'un contrôleur permettant, le pointage et la sélection pour permettre à l'agent de sûreté d'interagir avec l'image 3D apparaissant sur ledit écran tactile, notamment pour tenter de détecter un objet suspect dans un univers 3D exploitant ladite image 3D.

### Module de génération 10

Le module de génération 10 permet de générer au moins une image 3D comportant au moins un élément graphique 3D correspondant à un objet à détecter par un agent de sûreté ou par un algorithme de détection utilisant l'intelligence artificielle. Le module de génération 10 peut au moins en partie se présenter sous la forme d'une application ou d'un programme d'ordinateur mis en oeuvre par l'équipement informatique 1.

### Préparation

Le module de génération 10 est configuré pour préparer au moins un élément graphique 3D à détecter, ledit au moins un élément graphique 3D étant caractérisé par un maillage de points et au moins un matériau.

Le module de génération 10 peut-être configuré pour, lors de la préparation de l'au moins un élément graphique 3D, générer au moins un nouvel élément graphique 3D.

En variante ou en complément, le module de génération 10 peut-être configuré pour, lors de la préparation de l'au moins un élément graphique 3D, récupérer au moins un élément graphique 3D existant.

Le module de génération 10 est configuré pour, lors de la préparation, affecter une densité au matériau de l'au moins un élément graphique 3D, ladite densité permettant de déterminer la nature de la matière présente dans un voxel lors du traitement de l'image 3D.

Plus précisément, l'affectation d'un matériau et d'une densité permet de calculer une densité moyenne par voxel en fonction de la densité des matériaux représentés sur ledit voxel (en kg/m3) et de caractériser le comportement d'un matériau lors du balayage.

Sur ce dernier point, par exemple, un solide générera un volume plein, un métal induira des artefacts métalliques, un liquide sera généré dans le volume identifié en respectant la gravité avec insertion de vaguelettes simulant l'effet du tapis roulant, de la poudre sera générée dans le volume en respectant la gravité et une logique de tassement/empilement. Pour un matériau déformable, une opération booléenne peut être réalisée en priorisant les autres matériaux présents dans le même voxel. Pour un matériau souple, par exemple un vêtement, une déformation du maillage peut être réalisée, par exemple lors d'une phase de secouage (décrite ci-après).

### Image 3D

Le module de génération 10 est configuré pour générer une image 3D en voxels représentant au moins un contenant à contrôler par l'agent de sûreté ou par l'algorithme de détection utilisant l'intelligence artificielle.

Le module de génération 10 est configuré pour générer l'image 3D à partir d'au moins un contenant réel, par exemple via un équipement d'imagerie radioscopique 3D réel.

En variante ou en complément, le module de génération 10 peut-être configuré pour générer l'image 3D de manière virtuelle, par exemple à partir d'un générateur d'images 3D.

### Ajout de l'élément graphique 3D maillé

Le module de génération 10 peut-être configuré pour intégrer au moins un élément graphique 3D préparé dans l'image 3D générée afin que ledit au moins un élément graphique 3D apparaisse dans le contenant sur l'image 3D.

### Traitement

Le module de génération 10 est configuré pour traiter l'image 3D comportant l'au moins un élément graphique 3D intégré pour transformer le maillage de points de l'au moins un élément graphique 3D en voxels dans l'image 3D.

Le module de génération 10 est configuré pour, lors du traitement de l'image 3D comportant l'au moins un élément graphique 3D intégré, réaliser un balayage numérique des éléments de l'image 3D.

Le module de génération 10 est configuré pour, lors d'un balayage, envoyer une pluralité de rayons numériques sur les éléments de l'image 3D afin de définir pour chacun leur contour et leur position. De préférence, une méthode de type « ray tracing » ou « ray marching » est utilisée.

Le module de génération 10 est configuré pour associer des métadonnées de l'au moins un élément graphique 3D à une zone de l'image 3D comprenant au moins en partie l'au moins un élément graphique 3D.

De préférence, les métadonnées recueillis sont d'ordres géométriques et fonctionnelles. Les données géométriques peuvent être liées à une boîte englobante (connue sous le nom de « Bounding Box ») définie par son centre et sa taille dans le référentiel du bagage, ou bien être un volume, une masse, etc. Les données fonctionnelles peuvent être un nom, un type de menace à détecter par l'agent ou l'algorithme de détection à intelligence artificielle, un rôle dans une menace composée, une spécificité technique (par exemple une tension électrique), etc.

Les métadonnées peuvent aussi comprendre des informations provenant du contenant qui peuvent être interprétées comme des alarmes. Les données d'alarmes du contenant peuvent être recueillies lors de la phase d'import du contenant. Les métadonnées sont associées à chaque volume et regroupées lors de la fusion des volumes comme cela est décrit ci-après.

### Post-traitement

Le module de génération 10 est configuré pour post-traiter l'image 3D traitée afin d'ajouter des effets liés au matériau afin de le fusionner dans l'image 3D.

Le module de génération 10 est configuré pour, lors du post-traitement de l'image 3D, créer un volume de matière brute, créer un volume d'effets artificiels métalliques, créer un volume d'effets Compton et fusionner ces trois volumes.

Le module de génération 10 est configuré pour, lors du post-traitement de l'image 3D, ajouter des effets artificiels liés au matériau du contenant et au matériau de chaque objet.

### Utilisation

Le module de génération 10 est configuré pour détecter l'au moins un élément graphique 3D lorsque la zone de l'image 3D post-traitée sélectionnée correspond à la zone associée aux métadonnées. Pour éviter une étape de recherche, qui serait effectuée en temps réel par un équipement d'imagerie radioscopique 3D réel, le module de génération 10 est configuré pour exploiter directement les informations de coordonnées, de boîte englobante et de volume déjà prêtes et fournies dans les métadonnées.

Le module de génération 10 ou l'équipement informatique 1 comprennent un processeur apte à mettre en oeuvre un ensemble d'instructions permettant de réaliser ces fonctions.

### Exemple de mise en oeuvre

Dans une étape E1, le module de génération 10 prépare un ou plusieurs éléments graphique 3D à détecter. Chaque élément graphique 3D est caractérisé par son maillage de points et son ou ses matériaux.

La préparation comprend la génération d'au moins un nouvel élément graphique 3D ou la récupération d'au moins un élément graphique 3D existant.

Dans la suite de l'exemple, pour des raisons de clarté, un unique élément graphique 3D est préparé et correspond à un couteau avec une lame métallique et un manche en une autre matière, par exemple en bois.

Avantageusement, le procédé peut comprendre une étape de mise à l'échelle de l'au moins un nouvel élément graphique 3D afin que tous les objets 3D manipulés dans le procédé soient à une même échelle de référence, par exemple le mètre.

De préférence, le procédé comprend une étape de retopologie permettant de simplifier la topologie d'un maillage pour le rendre plus propre et plus facile à utiliser et manifold.

De préférence, la préparation comprend une étape d'identification et d'affectation d'un matériau à chaque partie de chaque élément graphique 3D. Ainsi, dans le présent exemple, le manche du couteau est associé au matériau bois (densité de l'ordre de 690 kg / m³ pour du noyer par exemple) et la lame du couteau est associée au matériau acier (densité de l'ordre de 7800 kg / m³). L'association d'un matériau à une zone de maillage peut être effectué dans la phase de préparation via une interface graphique (par exemple par pointage ou sélection d'une zone) ou bien peut être intégrée dans le code informatique, notamment pour les objets 3D générés dynamiques (par exemple des câbles ou des liquides).

De préférence encore, la préparation comprend une étape d'affectation d'une densité de matériau à chaque matériau de chaque élément graphique 3D, ladite densité permettant de déterminer la nature de la matière présente dans chaque voxel de l'image 3D lors du traitement de ladite image 3D. Par exemple, l'eau présente une densité de 1000 kg / m³.

Dans une étape E2, le module de génération 10 génère une image 3D en voxels représentant au moins un contenant à contrôler par l'agent de sûreté ou par l'algorithme de détection basé sur de l'intelligence artificielle, par exemple une valise ou un sac. Dans la suite de l'exemple, pour des raisons de clarté, le contenant est unique et est une valise. La génération de l'image 3D peut être réalisée à partir d'une valise réelle, par exemple en la passant dans un équipement d'imagerie radioscopique 3D réel, ou de manière virtuelle, par exemple à partir d'un générateur d'images 3D, de manière connue en soi. Sur l'image 3D, la valise peut comporter des objets placés à l'intérieur de celle-ci, comme par exemple des vêtements, des documents, un appareil photo, des chaussures, des stylos, etc. Ces objets peuvent être réellement posés dans la valise et être passés ainsi dans l'équipement d'imagerie radioscopique 3D ou bien être ajoutés dans l'image 3D par un générateur d'images 3D. Lorsque les objets sont placés dans la valise par un générateur d'images 3D, le procédé peut comprendre une étape de secouage permettant de disperser et répartir les objets dans la valise, notamment lorsque ceux-ci sont simplement placés à la verticale dans la valise lors de leur intégration par le générateur d'images 3D.

Dans une étape E3, le module de génération 10 intègre le couteau préparé dans l'image 3D générée afin que ledit couteau apparaisse comme étant placé à l'intérieur de la valise sur l'image 3D. A ce stade, le couteau est encore un élément graphique 3D maillé.

Dans une étape E4, le module de génération 10 réalise un traitement de l'image 3D comportant la représentation 3D du couteau intégrée afin de transformer le maillage de points de la représentation 3D du couteau en voxels dans l'image 3D de la valise. En d'autres termes, le couteau et la valise sont assemblés dans l'image 3D. Cette transformation permet notamment de définir les contours et les traces d'épaisseurs du couteau intégré dans l'image 3D et des autres objets. Dans cet exemple de mise en oeuvre, le traitement de l'image 3D comportant le couteau intégré comprend un balayage numérique des éléments de l'image 3D. Par exemple, ce balayage peut comprendre l'envoi d'une pluralité de rayons numériques sur les éléments de l'image 3D afin de définir pour chacun leur contour et leur position. Une méthode connue de « ray marching » peut par exemple être utilisée. De manière générale, le procédé selon l'invention peut être utilisé avec un balayage numérique sur au moins un axe, par exemple sur trois axes (les trois dimensions), en aller et retour afin de définir les contours et épaisseurs des objets apparaissant sur l'image 3D.

Dans une étape E5, des métadonnées relatives au couteau, par exemple sa nature en tant qu'objet, sa position dans l'image 3D et son volume dans l'image 3D, sont associées à une zone de l'image 3D traitée. Ces métadonnées peuvent avoir été générée lors de la phase de préparation : par exemple, des comportements dynamiques peuvent avoir été affectés en « glissé & déposé » sur les objets. Par exemple, un couteau pourra être associé à un type de menace pointu-tranchant, une pile pourra être associée à sa tension électrique, etc.

Dans une étape E6, le module de génération 10 réalise un post-traitement de l'image 3D traitée pour ajouter des effets artificiels liés au matériau de l'au moins un élément graphique 3D afin de fusionner ledit au moins un élément graphique 3D dans l'image 3D. Les effets artificiels, ou artefacts, sont des effets tels que ceux visibles sur les images 3D générées par des équipements d'imagerie radioscopique 3D réel.

On notera que l'étape E5 pourrait avoir être réalisée avant l'étape E4 ou bien après l'étape E6 ou bien en parallèle de l'étape E4 ou de l'étape E6.

Dans cet exemple préféré, le post-traitement de l'image 3D comprend la création d'un volume de matière brute, la création d'un volume d'effets artificiels métalliques, la création d'un volume d'effet Compton et la fusion de ces trois volumes. Le volume de matière brute, le volume d'effets artificiels métalliques et le volume d'effet Compton correspondent au volume de matière représenté sur l'image 3D à la même échelle.

Le volume de matière brute correspond à un volume 3D comprenant les objets 3D générés à insérer. Notamment, pour définir le volume de matière brute, les points d'impact des rayons numériques sur les objets sont pris en compte pour calculer le ratio de matière présente dans chaque voxel de l'image 3D traitée et, de préférence, la densité de chaque voxel, en particulier lorsque ledit voxel comprend plusieurs matériaux. Dans ce dernier cas, la densité du voxel est calculée comme étant la somme des produits de la densité de chaque matériau par le volume occupé par ledit matériau dans le voxel.

Plus précisément, l'établissement du volume brut suit de préférence l'algorithme suivant : pour chaque voxel, les traces de matières qui le composent sont détectées, puis, selon le comportement du ou des matériaux [déformable, poudre, liquide, solide ...], leurs valeurs de densités kg/m3 et l'angle d'incidence du rayon de balayage numérique sur la matière, on établit leur ratio de participation dans le voxel et on renseigne cette valeur dans le volume brut.

La notion de volume "brut" reflète un environnement de scan "parfait" sans aucun défaut. Les défauts pouvant apparaître dans un scan 3D dans un contexte machine réelle peuvent notamment être un élément avec une densité non-uniforme, un élément avec un défaut de fabrication ou de l'usure ou présentant un état dégradé, un équipement d'imagerie radioscopique 3D qui émet des artefacts à cause d'une mauvaise calibration ou de son usure, ou bien un équipement d'imagerie radioscopique 3D peu performant.

La création du volume d'effets artificiels métalliques correspond à faire apparaître sur l'image 3D, notamment sur le couteau, des déformations telles qu'elles apparaissent sur les images d'un équipement d'imagerie radioscopique 3D réel faites sur une valise réelle contenant des objets métalliques réels. La création du volume d'effets artificiels métalliques comprend l'analyse de la présence de métal dans l'image 3D traitée, l'analyse de la présence de métal dans les éléments graphiques 3D ajoutés (couteau), l'application d'effets artificiels générés par la valise sur le couteau et l'application d'effets artificiels générés par le couteau sur la valise et ses autres objets.

La création du volume d'effet Compton, connu en soi, implique la création d'un volume comportant des effets artificiels correspondant à la diffusion élastique lorsqu'on considère un électron libre mais inélastique pour un électron lié.

La fusion de ces trois volumes est réalisée par superposition puis une fusion est réalisée avec la valise afin de fondre le couteau dans l'image 3D de la valise comme s'il était un élément réel d'une valise scannée en 3D.

Un post-traitement d'artefacts métalliques est réalisé sur l'ensemble de la valise et des objets qu'elle contient afin de faire apparaître les effets liés aux objets métalliques dans leur configuration finale dans la valise.

Ensuite, l'image 3D post-traitée est mise à disposition d'un agent de sûreté ou d'un algorithme de détection utilisant l'intelligence artificielle dans une étape E7, soit directement sur l'équipement informatique 1 dans le cas par exemple d'un ordinateur ou d'une tablette ou d'un smartphone ou d'un équipement de réalité virtuelle ou augmentée ou bien, comme illustré sur la figure 2, via un réseau de communication 4 et un client installé sur équipement d'utilisateur (ordinateurs, tablette et smartphone 3 sur la figure 2) distant dans le cas où le module de génération 10 est implémenté sur un serveur.

L'agent de sûreté ou l'algorithme de détection utilisant l'intelligence artificielle sélectionne ou pointe alors, dans une étape E8, une zone de l'image 3D post-traitée. Si la zone sélectionnée correspond au couteau, par exemple en vérifiant les métadonnées sur la position du couteau dans l'image 3D post-traitée, alors la détection du couteau est réalisée et confirmée dans une étape E9. Le logiciel de présentation à l'agent de sûreté est agnostique du contenu et utilise le fichier de métadonnées comme une carte.

En permettant l'intégration totale d'un objet 3D de type couteau dans une image 3D, l'invention permet de réaliser une formation efficace des agents de sûreté et/ou de valider également la fiabilité et la performance d'un algorithme de détection basé sur de l'intelligence artificielle. Notamment de nombreuses images 3D représentant différents contenants comportant différents objets, interdits ou non, peuvent être générées avec le procédé selon l'invention et utilisées en grand nombre pour former et tester les agents de sûreté. Le procédé et le module de génération selon l'invention peuvent également être utilisés avec un équipement d'imagerie radioscopique 3D réel pour détecter en temps réel les menaces et augmenter ainsi la sécurité, notamment des aéroports.

## Revendications

1. Procédé de génération d'une image 3D comportant au moins un élément graphique 3D fusionné correspondant à au moins un objet à détecter par un agent de sûreté ou par un algorithme de détection utilisant l'intelligence artificielle, ledit procédé comprenant les étapes de :
- préparation (E1) d'au moins un élément graphique 3D à détecter, ledit au moins un élément graphique 3D étant **caractérisé par** un maillage de points et au moins un matériau,
- génération (E2) d'une image 3D en voxels représentant au moins un contenant à contrôler par l'agent de sûreté ou par l'algorithme de détection utilisant l'intelligence artificielle,
- intégration (E3) de l'au moins un élément graphique 3D préparé dans l'image 3D générée afin que ledit au moins un élément graphique 3D apparaisse dans le contenant sur l'image 3D,
- traitement (E4) de l'image 3D comportant l'au moins un élément graphique 3D intégré pour transformer le maillage de points de l'au moins un élément graphique 3D en voxels dans l'image 3D,
- post-traitement (E6) de l'image 3D traitée pour ajouter aux voxels des effets artificiels liés au matériau de l'au moins un élément graphique 3D afin de fusionner ledit au moins un élément graphique 3D dans l'image 3D.

2. Procédé selon la revendication 1, dans lequel le traitement de l'image 3D comportant l'au moins un élément graphique 3D intégré comprend un balayage numérique 3D des éléments de l'image 3D.

3. Procédé selon la revendication précédente, dans lequel le balayage comprend l'envoi d'une pluralité de rayons numériques sur les éléments de l'image 3D afin de définir pour chacun leur contour et leur position.

4. Procédé selon l'une quelconque des revendications précédentes, dans lequel l'étape de génération (E2) d'une image 3D en voxels est réalisée à partir d'au moins un contenant réel, par exemple via un équipement d'imagerie radioscopique 3D réel, ou de manière virtuelle, par exemple à partir d'un générateur d'images 3D.

5. Procédé selon l'une quelconque des revendications précédentes, ledit procédé comprenant en outre une étape (E5) d'association de métadonnées de l'au moins un élément graphique 3D à une zone de l'image 3D comprenant au moins en partie l'au moins un élément graphique 3D, une étape (E8) de sélection, par l'agent de sûreté ou par l'algorithme de détection utilisant l'intelligence artificielle, d'une zone de l'image 3D post-traitée, et une étape (E9) de détection de l'au moins un élément graphique 3D lorsque la zone de l'image 3D post-traitée sélectionnée correspond à la zone associée aux métadonnées.

6. Procédé selon l'une quelconque des revendications précédentes, dans lequel la préparation comprend la génération d'au moins un nouvel élément graphique 3D ou la récupération d'au moins un élément graphique 3D existant.

7. Procédé selon l'une quelconque des revendications précédentes, dans lequel le post-traitement de l'image 3D comprend la création d'un volume de matière brute, la création d'un volume d'effets artificiels métalliques, la création d'un volume d'effet Compton et la fusion de ces trois volumes.

8. Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en oeuvre un procédé selon l'une quelconque des revendications précédentes.

9. Module de génération (10) d'une image 3D comportant au moins un élément graphique 3D correspondant à un objet à détecter par un agent de sûreté ou par un algorithme de détection utilisant l'intelligence artificielle, ledit module (10) étant configuré pour:
- préparer au moins un élément graphique 3D à détecter, ledit au moins un élément graphique 3D étant **caractérisé par** un maillage de points et au moins un matériau,
- générer une image 3D en voxels représentant au moins un contenant à contrôler par l'agent de sûreté ou par l'algorithme de détection utilisant l'intelligence artificielle,
- intégrer au moins un élément graphique 3D préparé dans l'image 3D générée afin que ledit au moins un élément graphique 3D apparaisse dans le contenant dans l'image 3D,
- traiter l'image 3D comportant l'au moins un élément graphique 3D intégré pour transformer le maillage de points de l'au moins un élément graphique 3D en voxels dans l'image 3D,
- post-traiter l'image 3D traitée pour ajouter des effets liés au matériau afin de finaliser sa fusion dans l'image 3D.

10. Equipement informatique (1) comprenant un module de génération (10) selon la revendication précédente.
